Europäisches Patentamt

European Patent Office

Office européen des brevets

(19)

(11) **EP 1 373 051 B1**

(12) **EUROPÄISCHE PATENTSCHRIFT**

| | |
|---|---|
| (45) Veröffentlichungstag und Bekanntmachung des Hinweises auf die Patenterteilung:<br>**06.10.2004   Patentblatt 2004/41** | (51) Int Cl.⁷: **B62D 5/00**, B62D 6/00 |
| (21) Anmeldenummer: **02719895.1** | (86) Internationale Anmeldenummer:<br>**PCT/EP2002/001855** |
| (22) Anmeldetag: **21.02.2002** | (87) Internationale Veröffentlichungsnummer:<br>**WO 2002/076806 (03.10.2002 Gazette 2002/40)** |

(54) **FAHRZEUGLENKUNG ZUM STEUERN EINES LENK- ODER EINSCHLAGWINKELS MINDESTENS EINES FAHRZEUGRADS EINES FAHRZEUGS**

VEHICLE STEERING SYSTEM FOR CONTROLLING A STEERING OR STEERING LOCK ANGLE OF AT LEAST ONE WHEEL OF A VEHICLE

SYSTEME DE DIRECTION DE VEHICULE POUR LA COMMANDE D'UN ANGLE DE DIRECTION OU DE BRAQUAGE D'AU MOINS UNE ROUE D'UN VEHICULE

| | |
|---|---|
| (84) Benannte Vertragsstaaten:<br>**AT BE CH CY DE DK ES FI FR GB GR IE IT LI LU MC NL PT SE TR** | (72) Erfinder:<br>• **NIESSEN, Harwin**<br>  **73230 Kirchheim unter Teck (DE)**<br>• **HENRICHFREISE, Hermann**<br>  **51429 Bergisch Gladbach (DE)** |
| (30) Priorität: **27.03.2001   DE 10115018** | |
| (43) Veröffentlichungstag der Anmeldung:<br>**02.01.2004   Patentblatt 2004/01** | (74) Vertreter: **Gerber, Wolfram**<br>**Lenzing Gerber,**<br>**Postfach 20 05 09**<br>**40103 Düsseldorf (DE)** |
| (73) Patentinhaber: **ThyssenKrupp Presta SteerTec GmbH**<br>**40476 Düsseldorf (DE)** | (56) Entgegenhaltungen:<br>**EP-A- 1 172 280        DE-C- 19 626 540**<br>**DE-C- 19 755 044** |

**Beschreibung**

Die vorliegende Erfindung betrifft eine Fahrzeuglenkung zum Steuern eines Lenk- oder Einschlagwinkels mindestens eines Fahrzeugrads eines Fahrzeugs mit den Merkmalen des Oberbegriffs des Anspruchs 1.

Bei hydraulischen Hilfskraftlenksystemen wie z.B. offenbart in der DE 197 55 044 C steuert in der Regel ein Steuerventil einen der Drehbewegung des Lenkrads entsprechenden Öldruck in dem Lenkzylinder. Ein elasitsches Drehmomentmeßglied, z.B. ein Drehstab, Spiralfeder oder Blattfeder, wandelt das am Lenkrad angreifende Drehmoment in einen Steuerweg um. Durch den Steuerweg verschieben sich die als Fasen oder Facetten ausgebildeten Steuerkanten und bilden so den entsprechenden Öffnungsquerschnitt für den Ölstrom.

Bei Hilfskraftlenksystemen, bei denen das unterstützende Moment mittels eines Elektromotors als Stellaggregat erzeugt wird, dient ebenfalls in der Regel ein Drehmomentmeßglied zur Messung des vom Fahrer aufgebrachten Handmoments.

Steigende Anforderungen im Hinblick auf den Bedienungskomfort der Hilfskraftlenkung und die Sicherheit des Kraftfahrzeugs haben zur Einführung von parametrierbaren-Hilfskraftlenkungen geführt. Diese arbeiten z.B. geschwindigkeitsabhängig, d.h. die vom elektronischen Tachometer angezeigte Fahrgeschwindigkeit steuert bzw. beeinflußt die vom Fahrer aufzubringende Betätigungskraft am Lenkrad bzw. der Lenkhandhabe. Ein Steuergerät wertet die Geschwindigkeitssignale aus und bestimmt die Größe des einzuregelnden unterstützenden Moments, welches von dem Stellaggregat zum unterstützenden Einstellen des Lenk- bzw. Einschlagwinkels erforderlich ist. So kann die spezielle Auslegung der Lenkungscharakteristik dazu führen, daß im Parkierbereich und beim Lenken im Stand nur minimale Kräfte am Lenkrad aufzubringen sind, während sich mit zunehmender Geschwindigkeit des Fahrzeugs die Größe der Hilfskraft bzw. des Hilfsmoments reduziert. Somit wird bei hohen Geschwindigkeiten exaktes und zielgenaues Lenken ermöglicht.

Nachteilig bei den bekannten Hilfskraftlenksystemen ist, daß das an der Lenkhandhabe bzw. dem Lenkrad angreifende Handmoment gemessen und lediglich mit einer Verstärkung an das Stellaggregat weitergegeben wird. Hierdurch wird meist nur ein unzureichender Bedienkomfort erzielt. Bei diesen Systemen muß in der Regel die aktive Rückstellung, d.h. die Rückstellung des losgelassenen Lenkrads in die Mittenstellung explizit mittels einer zusätzlichen Regelung implementiert werden, wodurch die gesamte Regelung/Steuerung des Systems kompliziert und störanfällig ist. Auch das Implementieren einer aktiven Dämpfung ist bei den herkömmlichen Systemen nur mit großem Aufwand und meist nur ungenügend realisierbar. Ferner ist bei diesen Systemen nachteilig, daß eine Reibungskompensation, das heißt die Berücksichtigung der in der Lenkung vorhanden Reibung nicht oder nur ungenügend berücksichtigt werden kann. Durch das Implementieren der vorgenannten Optionen wird der Regler meist derart komplex, daß er - wenn überhaupt - nur unter großem Aufwand optimert werden kann.

Aufgabe der vorliegenden Erfindung ist es, eine leichter zu optimierende Fahrzeuglenkung zu schaffen, bei der das vom Fahrer aufzubringende Handmoment vorgebbar und insbesondere exakt einregelbar ist.

Diese Aufgabe wird erfinderisch durch eine gattungsgemäße Fahrzeuglenkung mit den Merkmalen des Anspruchs 1 gelöst. Weitere erfinderische Ausgestaltungen dieser Fahrzeuglenkung ergeben sich durch die Merkmale der Unteransprüche.

Der für die Erfindung wesentliche Gedanke ist, daß ein Zustandsregler mittels Zustandsgrößen des Fahrzeugs eine Stellgröße $T_{req'}$ für die Steuervorrichtung erzeugt, bei dem die vom Fahrer aufzubringenden Lenkkräfte minimal wären, so daß eine möglichst momentenfreie Lenkung realisiert wäre. Ausgehend von der momentenfreien Lenkung kann der Stellgröße $T_{req'}$ leicht eine Führungsgröße $T_{ref}$ aufsummiert werden ohne daß bei der Berechnung bzw. Ermittlung des vom Fahrer aufzubringenden Handmoments $T_{driver,req}$ Rücksicht auf die sonst zu beachtenden Fahrzeugzustände genommen werden muß. Hierdurch ist es vorteilhaft möglich, das Fahrermoment aktiv vorzugeben und nicht, wie beim Stand der Technik, lediglich das gemessene Handmoment zur Berechnung der Unterstützung des Fahrers zu verstärken. Eine alternative Lösung zur Aufschaltung einer Führungsgröße ergibt sich, wenn die Stellgröße $T_{req'}$ mit einem Proportionalitätsfaktor multipliziert wird, der seinerseits von verschiedenen Größen wie z.B. der Fahrzeuggeschwindigkeit und dem Sensormoment abhängig ist.

So kann z.B. vorteilhaft das vom Fahrer aufzubringende Handmoment $T_{driver,req}$ eine Funktion der nachfolgend aufgezählten Parametern sein: Lenkradwinkel, Fahrzeuggeschwindigkeit, an der Fahrzeuglenkung angreifende Störgrößen wie z.B. Spurstangenkräfte sowie Kräfte an den Reifen oder Reaktionskräfte zwischen Reifen und Fahrbahn, verschiedene Fahrdynamikinformationen von den im Fahrzeug befindlichen Fahrsystemen, insbesondere dem Getriebe und/oder der Fahrdynamikregelung.

Es ist selbstverständlich, daß die o.g. Funktion nicht sämtliche der aufgezählten Parameter berücksichtigen muß. All diese Parameter können einzeln oder in verschiedensten_Kombinationen berücksichtigt werden. Ebenso ist es vorteilhaft möglich, daß der Fahrzeugführer der Lenkung vorgibt, daß er sportlich, komfortabel oder energiesparend fahren möchte. Durch derartige Vorgaben kann das aktiv vorgegebene gewünschte Handmoment $T_{driver,req}$ anders für die jeweilige Fahrsituation berechnet und genau vorgegeben werden.

Es ist jedoch von Vorteil, wenn zumindest einige der aufgeführten Parameter für die Funktion für das aufzubringende Handmoment Berücksichtigung finden.

Das aktiv vorgegebene gewünschte Handmoment $T_{driver,req}$ kann auch durch die Multiplikation von $T_{friction}$ mit einem Proportionalitätsfaktor $k_{assist}$, der z.B. eine Funktion der Größen Fahrzeuggeschwindigkeit $v_{vehicle}$ und dem Sensormoment $T_{sensor}$ sein kann, berechnet werden.

Vorteilhaft verfügt die Steuervorrichtung der erfindungsgemäßen Lenkung über einen Beobachter, der mittels eines mathematischen Modells der Lenkung des Fahrzeugs nicht gemessene und/oder nicht meßbare Zustandsgrößen des Fahrzeugs berechnet. Derartige Simulationsmodelle existieren für jedes Fahrzeug, so daß vorteilhaft unnötige Sensoren zur Ermittlung von Streckenzustandsgrößen und Störzustandsgrößen eingespart werden können.

Unter Streckenzustandsgrößen werden u.a. die ritzelseitige Winkelgeschwindigkeit $\Omega_{pinion}$, die Winkeldifferenz zwischen Lenkrad- und Ritzelseite $\Delta\varphi$, die Winkelgeschwindigkeitsdifferenz zwischen Lenkrad- und Ritzelseite $\Delta\Omega$ sowie das vom Stellaggregat abgegebene Drehmoment $T_{motor}$ verstanden. Es ist selbstverständlich, daß äquivalente Größen ebenfalls für die erfindungsgemäße Lenkung berücksichtigt werden können.

Unter Störzustandsgrößen werden u.a. das vom Fahrer aufgebrachte Drehmoment $T_{driver}$ sowie die an der Lenkung angreifenden Reibmomente $T_{friction}$ verstanden.

Zur Erzielung eines momentenfreien Lenkverhaltens benötigt der Zustandsregler zur Rückführung bzw. Aufschaltung die Strecken- und Störzustände der Strecke, d.h. der Lenkung.

Streckenzustände im Sinne der Zustandsraumtheorie sind z.B.

$$\underline{x}_p = \begin{bmatrix} \Omega_{pinion} \\ \Delta\varphi \\ \Delta\Omega \\ T_{motor} \end{bmatrix}$$

mit

$\Omega_{pinion}$     ritzelseitige Winkelgeschwindigkeit,
$\Delta\varphi$     Winkeldifferenz zwischen Lenkrad- und Ritzelseite,
$\Delta\Omega$     Winkelgechwindigkeitsdifferenz zwischen Lenkrad- und Ritzelseite,
$T_{motor}$     das vom Stellaggregat abgegebene Drehmoment.

Als Störzustände gelten z.B.

$$\underline{x}_d = \begin{bmatrix} T_{driver} \\ T_{friction} \end{bmatrix}$$

mit

$T_{driver}$     das vom Fahrer aufgebrachte Drehoment,
$T_{friction}$     die an der Lenkung angreifenden Reibmomente.

Durch die Rückführung der Streckenzustände über eine geeignete Matrix $\underline{K}_p$ und Aufschaltung der Störzustände (Reibungs-, oder Störgrößenkömpensation) über eine geeignete Matrix $\underline{K}_d$, welche durch einen geeigneten Zustandsreglerentwurf mit einem um ein Störmodell erweiterten Streckenmodell berechnet werden, wird dafür gesorgt, daß die gewählten Zielgrößen, z.B.

$$\underline{y}_{po} = \begin{bmatrix} T_{sensor} \\ \Delta\Omega \\ \Delta\alpha \end{bmatrix}$$

durch das vom Regler erzeugte Stellsignal $T_{req}'$ zu Null ausgeregelt werden. Diese Zielgrößen sind frei wählbar, müssen aber von den Streckenzuständen abhängig sein. In obiger Gleichung dient die Zielgröße $T_{sensor}$ der Realisierung der momentenfreien Regelung, die Zielgrößen $\Delta\Omega$ und $\Delta\alpha$ dienen der Realisierung der aktiven Schwingungsdämpfung. Damit ist eine "momentenfreie" Lenkung realisiert.

Nachfolgend werden einige Grundlegende Zusammenhänge der Erfindung anhand von Zeichnungen näher erläutert.

Es zeigen:

Fig. 1: Eine schematisch die Realisierung einer momentenfreien Fahrzeuglenkung;

Fig. 2: eine erfindungsgemäße Führungsgrößenaufschaltung;

Fig. 3: ein erfindungsgemäßer Zustandsbeobachter;

Fig. 4: funktionale Blöcke des erfindungsgemäßen Regelungskonzeptes;

Fig. 5: eine alternative Lösung zur Generierung des gewünschten Fahrermomentes $T_{driver,req}$ ;

Fig. 6: eine alternative Lösung zur Führungsgrößenaufschaltung gem. den Figuren 3 und 5.

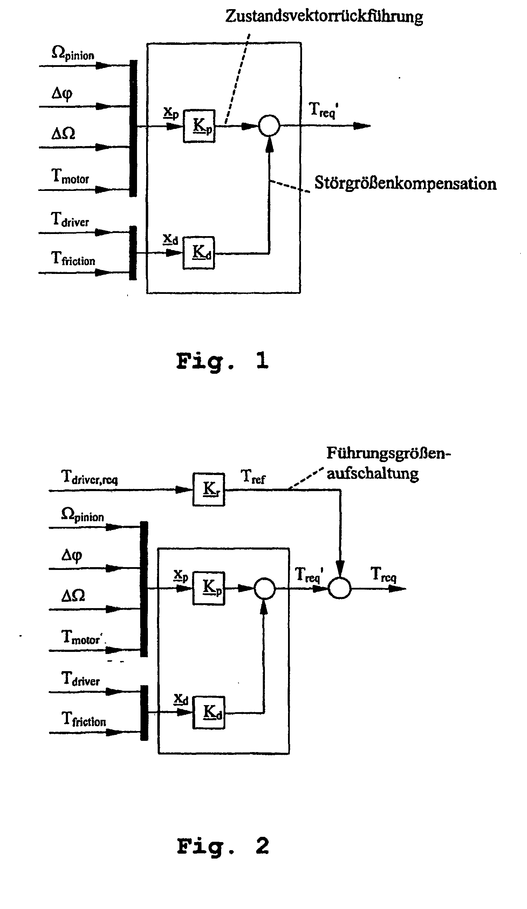

Die Figur 1 zeigt schematisch die Realisierung einer momentenfreien Fahrzeuglenkung durch Zustandsvektorrückführung mit Störgrößenkompensation.

Nachdem die momentenfreie Lenkung realisiert ist, kann über ein Führungsgrößenmodell ein gewünschtes Lenkgefühl erzielt werden. Unter Lenkgefühl wird hierbei das vom Fahrer gespürte bzw. aufzubringende Handmoment verstanden. Dazu wird aus dem vom Fahrer zu spürenden Handmoment $T_{driver,req}$ über eine Führungsgrößenaufschaltung mit der Matrix $\underline{K}_r$ die Größe $T_{ref}$ erzeugt und auf die Stellgröße $T_{req'}$ aufsummiert.

Die Figur 2 zeigt die Führungsgrößenaufschaltung und die Summierung der Größen $T_{req'}$ und $T_{ref}$ zu $T_{req}$, wobei $T_{req}$ Stellgröße für die Steuervorrichtung des Stellaggregats ist.

Die zu gewichtenden Zielgrößen werden damit zu

$$\underline{y}_{w} = \begin{bmatrix} T_{sensor} - T_{driver,req} \\ \Delta\Omega \\ \Delta\alpha \end{bmatrix}$$

$T_{driver,req}$ ist das Moment, welches der Fahrer spürt. Im Vergleich zum Zielgrößenvektor $y_{po}$ wird hier kein momentenfreies Lenken (d.h. $T_{sensor} = 0$) erzeugt, sondern ein um den Betrag des gewünschten Fahrermomentes $T_{driver,req}$ verringertes Sensormoment eingeregelt. Durch das zuvor entworfene momentenfreie Lenkverhalten ist das Fahrgefühl, d.h. das Moment $T_{driver,req}$, jetzt eine völlig frei formbare (von den Streckenzuständen unabhängige) Größe und kann eine beliebige Funktion der bereits beschriebenen Parameter sein.

Da es normalerweise nicht möglich ist, alle benötigten Zustandsgrößen zu messen, müssen diese aus den vohandenen Meßgrößen rekonstruiert werden. Dies kann z.B. durch ein differenzierendes Filter oder den bereits beschriebenen Zustandsbeobachter geschehen.

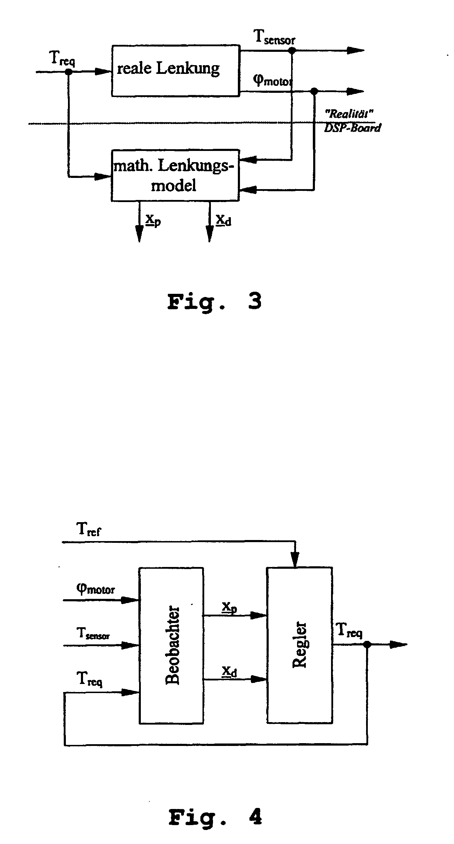

Wie die Figur 3 zeigt, kann der Zustandsbeobachter ein um ein Störmodell erweitertes mathematisches Parallelmodell der Strecke aufweisen und erhält als Eingangsgrößen die vom. Regler erzeugte Stellgröße $T_{req}$ sowie die vorhandenen Meßgrößen, z.B. das Drehmoment $T_{sensor}$ und den Motorwinkel $\varphi_{motor}$.

Durch die Rückführung der Differenzen aus den berechneten Meßgrößen und den tatsächlichen Meßgrößen über eine geeignete Matrix lassen sich die fehlenden Zustandsgrößen ermitteln. Die Berechnung dieser Matrix ist mittels eines geeigneten Beobachterentwurfs zu ermitteln.

Durch Zusammenschalten von Beobachter und Regler erhält man eine Regelung die für Reibungskompensation, frei gestaltbares Fahrergefühl sowie aktive Schwingungsdämpfung sorgt.

Die Figur 4 zeigt die funktionalen Blöcke des erfindungsgemäßen Regelungskonzeptes für die Fahrzeuglenkung. Der Beobachter ermittelt die für den Regler notwendigen Eingangsgrößen. Durch gleichzeitige Führungsgrößenaufschaltung von $T_{driver,req}$ wird durch die Regelung die Stellgröße $T_{req}$ entsprechend des einzustellenden Handgefühls bzw. Handmoments eingeregelt.

Wie bereits erläutert, ist $T_{req}$ die Stellgröße für die Steuervorrichtung des Stellaggregats. Durch die vorteilhafte Modularität der erfindungsgemäßen Fahrzeuglenkung bzw. deren Regelungskonzeptes, ist es problemlos möglich, das erfindungsgemäße Konzept in jedem Fahrzeug zu implementieren. Der Reglerentwurf gestaltet sich dabei sehr einfach, da in der Regel die mathematischen Modelle für die jeweiligen Fahrzeuge bekannt sind.

Dadurch, daß zuerst eine momentenfreie Lenkung realisiert wird, ist es problemlos möglich, eine für ein Fahrzeug erstellte Funktion für das vom Fahrer aufzubringende Fahrgefühl bzw. Handmoment für ein anderes Fahrzeug zu übernehmen. Es ist somit möglich, verschiedene Fahrzeuge mit exakt dem selben Fahrgefühl auszustatten.

Das mittels der Darstellungen aufgezeigte Regelungskonzept ist lediglich eine mögliche Ausführungsvariante der erfindungsgemäßen Fahrzeuglenkung. Es ist ist selbstverständlich möglich, daß die Summierung von $T_{ref}$ und $T_{req'}$ an einer anderen Stelle erfolgt. So können die einzelnen Matrizen $\underline{K}_r$, $\underline{K}_p$ und $\underline{K}_d$ selbstverständlich zu einer einzigen Matrix zusammengefaßt werden ohne vom erfinderischen Gedanken abzuweichen.

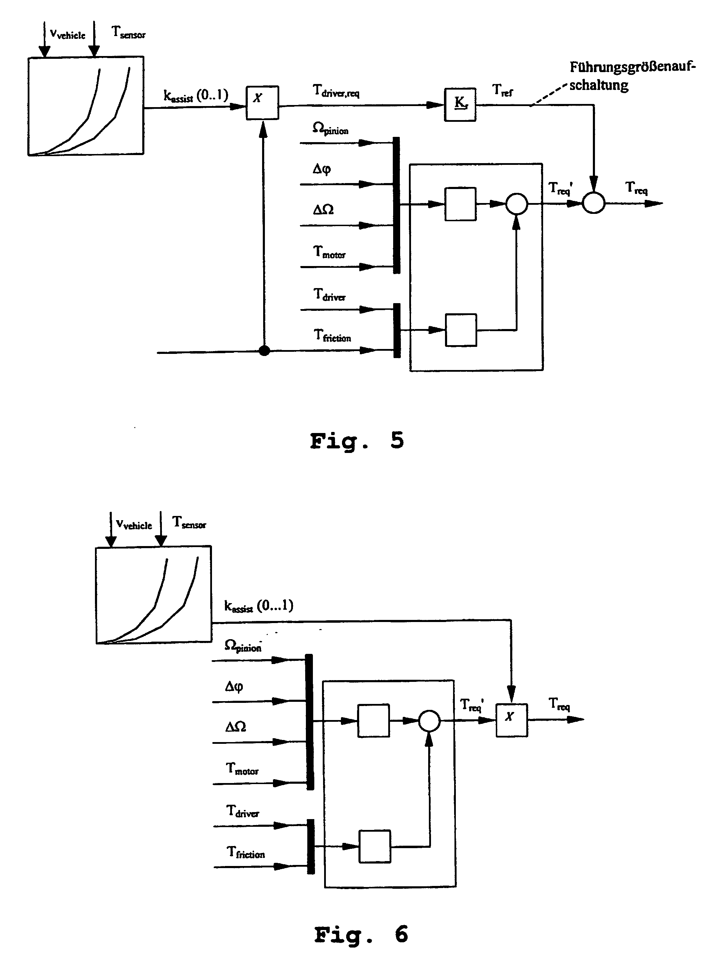

Die Figur 5 zeigt eine alternative Generierung des gewünschten Fahrermomentes $T_{driver,req}$ , wobei das gewünschte Fahrermomente $T_{driver,req}$ sich durch die Multiplikation von $T_{friction}$ mit einem Proportionalitätsfaktor $k_{assist}$ ergibt. Der Faktor $k_{assist}$ ist seinerseits eine Funktion von verschiedenen Größen wie z.B. der Fahrzeuggeschwindigkeit $v_{vehicle}$ und dem Sensormoment $T_{sensor}$.

Alternativ zur Führungsgrößenaufschaltung ist es ebenso im Sinne der Erfindung, wenn die Größe $T_{req'}$ mit einem Proportionalitätsfaktor multipliziert wird. Dieser Proportionalitätsfaktor kann, wie in Figur 6 dargestellt $k_{assist}$ sein.

**Patentansprüche**

1. Fahrzeuglenkung zum Steuern eines Lenk- oder Einschlagwinkels mindestens eines Fahrzeugrads eines Fahrzeugs, das aufweist:

   - eine Lenkhandhabe, insbesondere ein Lenkhandrad,
   - eine Detektierungsvorrichtung zum Erfassen des Betätigungsgrads der Lenkhandhabe;
   - eine mechanische Wirkverbindung zwischen der Lenkhandhabe und dem mindestens einen gelenkten Fahrzeugrad;
   - ein Stellaggregat zum unterstützenden Einstellen des Lenk- bzw. Einschlagwinkels;
   - eine Steuervorrichtung für das Stellagregat, wobei das vom Fahrer zur Steuerung des Kraftfahrzeuges tatsächlich aufzubringende Handmoment bzw. -kraft von der Steuervorrichtung in Abhängigkeit von Fahrzeugzustandsgrößen eingeregelt wird;

   **dadurch gekennzeichnet, daß** die Steuervorrichtung einen Zustandsregler aufweist, der mittels Zustandsgrößen des Fahrzeugs eine Stellgröße $T_{req'}$ für die Steuervorrichtung erzeugt, bei dem die vom Fahrer aufzubringenden Lenkkräfte minimal wären, so daß eine möglichst momentenfreie Lenkung realisiert wäre, und daß eine Referenzgrößenaufschaltung für das vom Fahrer aufzubringende Handmoment $T_{driver,req}$ eine Führungsgröße $T_{ref}$ erzeugt.

2. Fahrzeuglenkung nach Anspruch 1, **dadurch gekennzeichnet, daß** die Multiplikation der Größe $T_{friction}$ , die die an der Lenkung angreifenden Reibmomente darstellt, mit einem variablen Proportionalitätsfaktor $k_{assist}$ das vom Fahrer aufzubringende Handmoment $T_{driver,req}$ ergibt.

3. Fahrzeuglenkung zum Steuern eines Lenk- oder Einschlagwinkels mindestens eines Fahrzeugrads eines Fahrzeugs, das aufweist:

   - eine Lenkhandhabe, insbesondere ein Lenkhandrad,
   - eine Detektierungsvorrichtung zum Erfassen des Betätigungsgrads der Lenkhandhabe;
   - eine mechanische Wirkverbindung zwischen der Lenkhandhabe und dem mindestens einen gelenkten Fahrzeugrad;
   - ein Stellaggregat zum unterstützenden Einstellen des Lenk- bzw. Einschlagwinkels;
   - eine Steuervorrichtung für das Stellagregat, wobei das vom Fahrer zur Steuerung des Kraftfahrzeuges tatsächlich aufzubringende Handmoment bzw. -kraft von der Steuervorrichtung in Abhängigkeit von Fahrzeugzustandsgrößen eingeregelt wird;

   **dadurch gekennzeichnet, daß** die Steuervorrichtung einen Zustandsregler aufweist, der mittels Zustandsgrößen des Fahrzeugs eine Stellgröße $T_{req'}$ für die Steuervorrichtung erzeugt, bei dem die vom Fahrer aufzubringenden Lenkkräfte minimal wären, so daß eine möglichst momentenfreie Lenkung realisiert wäre, und daß die Führungsgröße $T_{ref}$ durch Multiplikation von der Stellgröße $T_{req'}$ mit einem Proportionalitätsfaktor $k_{assist}$ erzeugt wird.

**4.** Fahrzeuglenkung nach Anspruch 3, **dadurch gekennzeichnet, daß** der Proportionalitätsfaktor $k_{assist}$ eine Funktion der Fahrzeuggeschwindigkeit und dem Sensormoment $T_{sensor}$ ist.

**5.** Fahrzeuglenkung nach einem der vorherigen Ansprüche, **dadurch gekennzeichnet, daß** die Steuervorrichtung einen Beobachter aufweist, der mittels eines mathematischen Modells der Lenkung des Fahrzeugs nicht gemessene und/oder nicht meßbare Zustandsgrößen des Fahrzeugs ermittelt.

**6.** Fahrzeuglenkung nach einem der vorherigen Ansprüche, **dadurch gekennzeichnet , daß** für die Berechnung von $T_{req}$, Streckenzustandsgrößen und Störzustandsgrößen berücksichtigt werden.

**7.** Fahrzeuglenkung nach Anspruch 6, **dadurch gekennzeichnet, daß** die Streckenzustandsgrößen z.B. die ritzelseitige Winkelgeschwindigkeit $\Omega_{pinion}$ und/oder die Winkeldifferenz zwischen Lenradund Ritzelseite $\Delta\varphi$ und/oder die Winkelgeschwindigkeitsdifferenz zwischen Lenkrad- und Ritzelseite $\Delta\Omega$ und/oder das vom Stellaggregat abgegebene Drehmoment $T_{motor}$ und/oder äquivalente Größen sind.

**8.** Fahrzeuglenkung nach Anspruch 6, **dadurch gekennzeichnet, daß** Störzustandsgrößen das vom Fahrer aufgebrachte Drehmoment $T_{driver}$ und/oder die an der Lenkung angreifenden Reibmomente $T_{friction}$ sind.

**9.** Fahrzeuglenkung nach einem der Ansprüche 6 bis 8, **dadurch gekennzeichnet, daß** durch Rückführung der Streckenzustandsgrößen über eine geeignete Matrix $\underline{K}_p$ und Aufschaltung der Störzustandsgrößen über eine geeignete Matrix $\underline{K}_d$ die Stellgröße $T_{req}$, erzeugt wird.

**10.** Fahrzeuglenkung nach einem der vorherigen Ansprüche, **dadurch gekennzeichnet, daß** über eine Führungsgrößenaufschaltung in einer Matrix $\underline{K}_r$ ein gewünschtes Handmoment $T_{driver,req}$ auf die Stellgröße $T_{req}$, aufsummiert wird.

**11.** Fahrzeuglenkung nach Anspruch 10, **dadurch gekennzeichnet, daß** das gewünschte Handmoment $T_{driver,req}$ eine Funktion des Lenkradwinkels und/oder der Fahrzeuggeschwindigkeits und/oder der an der Fahrzeuglenkung angreifenden Störgrößen wie z.B. Spurstangenkräfte und/oder Kräfte an den Reifen und/oder Reaktionskräfte zwischen Reifen und Fahrbahn ist.

**12.** Fahrzeuglenkung nach Anspruch 10 oder 11, **dadurch gekennzeichnet , daß** das gewünschte Handmoment $T_{driver,req}$ durch Vorgaben des Fahrzeugführers vorgebbar und/oder beeinflußbar ist.

**13.** Fahrzeuglenkung nach Anspruch 12, **dadurch gekennzeichnet, daß** eine Vorgabe die Einstellung des Fahrmodus wie z.B. "economy" oder "sportlich" ist.

**14.** Fahrzeuglenkung nach einem der Ansprüche 10 bis 13, **dadurch gekennzeichnet, daß** das gewünschte Handmoment $T_{driver,req}$ eine Funktion von verschiedenen Fahrdynamikinformationen von den im Fahrzeug befindlichen Fahrsystemen, insbesondere dem Getriebe und/oder der Fahrdynamikregelung, ist.

**15.** Fahrzeuglenkung nach einem der vorherigen Ansprüche, **dadurch gekennzeichnet, daß** nicht gemessene Zustandsgrößen des Fahrzeugs durch differenzierende Filter oder den Beobachter ermittelt werden.

**16.** Fahrzeuglenkung nach einem der vorhergehenden Ansprüche, **dadurch gekennzeichnet, daß** der Zustandsregler über ein Gütefunktional so ausgelegt ist, daß er eine aktive Schwingungsdämpfung realisiert.

**Claims**

**1.** Vehicle steering system for controlling a steering or steering lock angle of at least one wheel of a vehicle, which has:

- A steering handle, in particular a steering wheel;
- A detection device for recording the degree of actuation of the steering handle;
- A mechanical actuation link between the steering handle and at least one steered vehicle wheel;
- An actuator to provide supported adjustment of the steering or steering lock angle;
- A control device for the actuator, whereby the actual manual torque or force to be applied by the driver to control the vehicle is regulated by the control device as a function of the vehicle state values;

**characterised in that** the control device has a state regulator, which generates an adjustment parameter $T_{req}$ for the control device by means of state values of the vehicle, in which the steering forces to be applied by the driver would be minimal, so that the most torque-free possible steering would be achievable, and that a reference value lock-on for the manual torque $T_{driver,req}$ to be applied by the driver produces a guide value $T_{ref}$.

2. Vehicle steering system according to Claim 1, **characterised in that** the multiplication of the value $T_{friction}$, which represents the friction moments engaging on the steering, with a variable proportionality factor $k_{assist}$, produces the manual torque to be applied by the driver, $T_{driver,req}$.

3. Vehicle steering system for controlling a steering or steering lock angle of at least one wheel of a vehicle, which has:

   - A steering handle, in particular a steering wheel;
   - A detection device for recording the degree of actuation of the steering handle;
   - A mechanical actuation link between the steering handle and at least one steered vehicle wheel;
   - An actuator to provide supported adjustment of the steering or steering lock angle;
   - A control device for the actuator, whereby the actual manual torque or force to be applied by the driver to control the vehicle is regulated by the control device as a function of the vehicle state values;

   **characterised in that** the control device has a state regulator, which generates an adjustment parameter $T_{req}$ for the control device by means of state values of the vehicle, in which the steering forces to be applied by the driver would be minimal, so that the most torque-free possible steering would be achievable, and **in that** the guide value $T_{ref}$ is generated by multiplying the adjustment parameter $T_{req}$ by a proportionality factor $k_{assist}$.

4. Vehicle steering system according to Claim 3, **characterised in that** the proportionality factor $k_{assist}$ is a function of the vehicle speed and the sensor torque $T_{sensor}$.

5. Vehicle steering system according to one of the foregoing claims, **characterised in that** the control device has an observation element, which by means of a mathematical model of the steering system of the vehicle, determines state values of the vehicle which are not measured and/or cannot be measured.

6. Vehicle steering system according to one of the foregoing claims, **characterised in that**, for the calculation of $T_{req}$, road state values and interference state values are taken into consideration.

7. Vehicle steering system according to Claim 6, **characterised in that** the road state values are, for example, the pinion-side angle velocity $\Omega_{pinion}$ and/or the angle difference between the steering wheel side and the pinion side $\Delta\varphi$ and/or the angle velocity difference between the steering wheel side and the pinion side $\Delta\Omega$ and/or the torque $T_{motor}$ issued by the actuator, and/or equivalent values.

8. Vehicle steering system according to Claim 6, **characterised in that** interference state values are the torque $T_{driver}$ applied by the driver and/or the friction torque $T_{friction}$ engaging on the steering system.

9. Vehicle steering system according to one of Claims 6 to 8, **characterised in that**, by feedback of the road state values by means of a suitable matrix $\underline{K}p$ and lock-on of the interference state values by means of a suitable matrix $\underline{K}d$, the adjustment parameter $T_{req}$ is generated.

10. Vehicle steering system according to one of the foregoing claims, **characterised in that**, by means of a guide value lock-on in a matrix $\underline{K}r$, a desired manual torque $T_{driver,req}$ is added up to the adjustment parameter $T_{req}$.

11. Vehicle steering system according to Claim 10, **characterised in that** the desired manual torque $T_{driver,req}$ is a function of the steering wheel angle and/or the vehicle speed and/or the interference values acting on the vehicle steering system, such as track rod forces and/or forces on the tyres and/or reaction forces between tyres and carriageway.

12. Vehicle steering system according to Claim 10 or 11, **characterised in that** the desired manual torque $T_{driver,req}$ can be specified by input by the vehicle driver and/or can be influenced thereby.

13. Vehicle steering system according to Claim 12, **characterised in that** an input for the setting of the driving mode is, for example, "economy" or "sport".

**14.** Vehicle steering system according to one of Claims 10 to 13, **characterised in that** the desired manual torque $T_{driver,req}$ is a function of various different items of driving dynamic information from the various driving systems located in the vehicle, in particular from the transmission and/or the vehicle dynamics control system.

**15.** Vehicle steering system according to one of the foregoing claims, **characterised in that** state values of the vehicle which are not measured are determined by differentiating filters or notified to the observation element.

**16.** Vehicle steering system according to one of the foregoing claims, **characterised in that** the state regulator is arranged by means of a quality function element in such a way that an active vibration damping effect is achieved.


**Revendications**

**1.** Système de direction pour véhicule, pour la commande d'un angle de direction ou de braquage d'au moins une roue du véhicule, qui comporte:

- un organe manuel de direction, notamment un volant de direction,
- un dispositif de détection servant à détecter le degré d'actionnement de l'organe manuel de direction;
- une liaison mécanique active entre l'organe manuel de direction et au moins une roue orientable du véhicule;
- une unité de réglage pour régler, en produisant une assistance, l'angle de direction ou de braquage;
- un dispositif de commande pour l'unité de réglage, le moment manuel ou la force manuelle devant être appliqué effectivement par le conducteur pour la commande du véhicule automobile, étant réglé par le dispositif de commande en fonction de grandeurs d'état du véhicule;

**caractérisé en ce que** le dispositif de commande comporte un régulateur d'état, qui, au moyen de grandeurs d'état du véhicule, produit une grandeur de réglage $T_{req}$, pour le dispositif de commande et dans lequel les forces de braquage devant être appliquées par le conducteur seraient minimales, de sorte qu'on obtiendrait un braquage autant que possible sans moment et un circuit d'application d'une grandeur de référence pour le moment manuel $T_{driver,req}$, devant être appliqué par le conducteur, produit une grandeur pilote $T_{ref}$.

**2.** Système de direction de véhicule selon la revendication 1, **caractérisé en ce que** la multiplication de la grandeur $T_{friction}$, qui représente les moments de frottement appliqués au système de direction, fournit, avec un facteur de proportionnalité $q_{assist}$ variable, le moment manuel $T_{driver,req}$ devant être appliqué par le conducteur.

**3.** Système de direction pour véhicule pour la commande d'un angle de direction ou de braquage d'au moins une roue d'un véhicule, qui comporte:

- un organe manuel de direction, notamment un volant de direction,
- un dispositif de détection servant à détecter le degré d'actionnement de l'organe manuel de direction;
- une liaison mécanique active entre l'organe manuel de direction et au moins une roue orientable du véhicule;
- une unité de réglage pour régler, en produisant une assistance, l'angle de direction ou de braquage du volant;
- un dispositif de commande pour l'unité de réglage, le moment manuel ou la force manuelle devant être appliqué effectivement par le conducteur pour la commande du véhicule automobile, étant réglé par le dispositif de commande en fonction de grandeurs d'état du véhicule;

**caractérisé en ce que** le dispositif de commande comporte un régulateur d'état, qui, au moyen de grandeurs d'état du véhicule, produit une grandeur de réglage $T_{req}$, pour le dispositif de commande, et dans lequel les forces de braquage devant être appliquées par le conducteur seraient minimales, de sorte qu'on obtiendrait un braquage autant que possible sans moment et que la grandeur pilote $T_{ref}$ est produite par multiplication par la grandeur de réglage $T_{req}$, avec un facteur de proportionnalité $k_{assist}$.

**4.** Système de direction pour véhicule selon la revendication 3, **caractérisé en ce que** facteur de proportionnalité $k_{assist}$ est une fonction de la vitesse du véhicule et du moment $T_{sensor}$ fourni par le capteur.

**5.** Système de direction pour véhicule selon l'une des revendications précédentes, **caractérisé en ce que** le dispositif de commande comporte un système d'observation qui détermine, au moyen d'un modèle mathématique du braquage du véhicule, une grandeur d'état du véhicule non mesurées et/ou non mesurables.

**6.** Système de direction pour véhicule selon l'une des revendications précédentes, **caractérisé en ce que** pour le calcul de $T_{req'}$, on prend en compte des grandeurs d'état de la section et des grandeurs d'état parasite.

**7.** Système de direction pour véhicule selon la revendication 6, **caractérisé en ce que** des grandeurs d'état de la section sont par exemple la vitesse angulaire côté pignon $\Omega_{pinion}$ et/ou la différence angulaire entre le côté du volant et le côté du pignon $\Delta\varphi$ et/ou la différence de vitesse angulaire entre le côté du volant et du côté du pignon $\Delta\Omega$ et/ou le moment $T_{motor}$ délivré par l'unité de réglage et/ou des grandeurs équivalentes.

**8.** Système de direction pour véhicule selon la revendication 6, **caractérisé en ce que** des grandeurs d'état parasites sont le couple $T_{driver}$ appliqué par le conducteur et/ou le moment de friction $T_{friction}$ agissant sur le système de direction.

**9.** Système de direction pour véhicule selon l'une des revendications 6 à 8, **caractérisé en ce que** la grandeur de réglage $T_{req}$, est produite par renvoi des grandeurs d'état de la section au moyen d'une matrice appropriée $\underline{K}_p$ et application des grandeurs d'état parasite par l'intermédiaire d'une matrice appropriée $\underline{K}_d$.

**10.** Système de direction pour véhicule selon l'une des revendications précédentes, **caractérisé en ce qu'**un moment manuel désiré $T_{driver,req}$ est ajouté à la grandeur de réglage $T_{req'}$ par l'intermédiaire d'un circuit d'application de la grandeur pilote dans une matrice $\underline{K}_r$.

**11.** Système de direction pour véhicule selon la revendication 10, **caractérisé en ce que** le moment manuel désiré $T_{driver,req}$ est fonction de l'angle du volant de direction et/ou de la vitesse du véhicule et/ou des grandeurs parasites, qui s'appliquent au système de direction du véhicule, comme par exemple des forces de barre de connexion et/ou des forces appliquées aux pneumatiques et/ou des forces de réaction entre les pneumatiques et la chaussée.

**12.** Système de direction pour véhicule selon la revendication 10 ou 11, **caractérisé en ce que** le moment manuel désiré $T_{driver,req}$ peut être prédéterminé et/ou influencé par détermination préalable de la part du conducteur du véhicule.

**13.** Système de direction pour véhicule selon la revendication 12, **caractérisé en ce qu'**une détermination préalable est le réglage du mode de conduite comme par exemple "à l'économie" ou "sportive".

**14.** Système de direction pour véhicule selon l'une des revendications 10 à 13, **caractérisé en ce que** le moment manuel désiré $T_{driver,req}$ est fonction de différentes informations de la dynamique de conduite, du système de conduite situé dans le véhicule, notamment de la boîte de vitesses et/ou de la régulation de la dynamique de déplacement.

**15.** Système de direction pour véhicule selon l'une des revendications précédentes, **caractérisé en ce que** des grandeurs d'état non mesurées du véhicule sont déterminées au moyen de filtres différentiateurs ou du système d'observation.

**16.** Système de direction pour véhicule selon l'une des revendications précédentes, **caractérisé en ce que** le régulateur d'état est agencé à l'aide d'un système fonctionnel de qualité de telle sorte qu'il réalise un amortissement actif des vibrations.

**Fig. 1**

**Fig. 2**

**Fig. 3**

**Fig. 4**

**Fig. 5**

**Fig. 6**